# EUROPÄISCHE PATENTSCHRIFT

(11) **EP 2 183 496 B1**
(45) Veröffentlichungstag und Bekanntmachung des Hinweises auf die Patenterteilung: **15.01.2014**
(21) Anmeldenummer: 08784371.0
(22) Anmeldetag: 19.07.2008
(51) Int. Cl.: F16C 32/04

(54) **VERFAHREN UND ANORDNUNG ZUM SENSORLOSEN BETRIEB VON MAGNETLAGERN**
METHOD AND ARRANGEMENT FOR THE SENSORLESS OPERATION OF MAGNETIC BEARINGS
PROCÉDÉ ET AGENCEMENT DE COMMANDE SANS CAPTEUR DE PALIERS MAGNÉTIQUES

(30) Priorität: 30.07.2007 DE 102007035677; 05.02.2008 DE 102008007512
(43) Veröffentlichungstag der Anmeldung: 12.05.2010
(73) Patentinhaber: Schaeffler Technologies AG & Co. KG, 91074 Herzogenaurach (DE)
(72) Erfinder: KATZSCHMANN, Michael, 98693 Ilmenau (DE); KORNETZKY, Peter, 98693 Ilmenau (DE)
(86) Internationale Anmeldenummer: PCT/DE2008/001190
(87) Internationale Veröffentlichungsnummer: WO 2009/015639

(56) Entgegenhaltungen:
- EP-A1- 0 632 209
- WO-A1-2004/027529
- DE-A1- 3 937 687
- JP-A- 7 071 456
- US-A- 4 652 820
- US-A- 5 300 841
- US-A- 5 696 412
- US-A- 5 844 339
- US-A1- 2006 227 860

## Beschreibung

### Gebiet der Erfindung

Die Erfindung betrifft ein Sensorsystem für ein Magnetlager nach Anspruch 1, eine Kombination aus Sensorsystem und Regeleinrichtung für ein Magnetlager nach Anspruch 9, eine übergeordnetes System nach Anspruch 12, ein Magnetlager nach Anspruch 13 sowie ein Verfahren nach Anspruch 14.

Magnetlager werden eingesetzt zur berührungslosen Führung und Halterung von beweglichen Teilen wie z. B. Rotoren von Motoren oder Flügelrädern von Pumpen. Durch den Wegfall des berührenden mechanischen Kontakts lassen sich u. a. Reibungsverluste optimieren, Verschleiß verringern und die Generation von Partikeln vermeiden. Wesentliche Bestandteile eines Magnetlagers sind:
1. ein Aktorsystem, das aus einem oder mehreren Elektromagneten besteht,
2. ein Sensorsystem, das die aktuelle Position des zu lagernden Objektes erfasst und eine Regelung auf eine Sollposition ermöglicht, und
3. elektrische Komponenten zur Signalerfassung, Regelung und zur Steuerung von Energieflüssen.

In der Regel ist das Sensorsystem eine Baugruppe, die starr gekoppelt mit und zusätzlich zu dem Aktorsystem angebracht ist. Zur Optimierung der Baugröße des Magnetlagers ist es wünschenswert, dass das Sensorsystem wenig Platz beansprucht bzw. dass ggf. ganz darauf verzichtet werden kann. Durch die Nutzung des Effektes, dass sich die Impedanz der Aktorspulen des Aktorsystems in Abhängigkeit von der Position ändert, kann das ohnehin benötigte Aktorsystem mit den Aktorspulen auch die Funktion des Positionssensors übernehmen. Entsprechende technische Lösungen sind bereits in der Patentliteratur beschrieben. Dabei werden u. a. folgende Wirkprinzipien angewendet:
- Bestimmung der Impedanz der Aktorspule mittels einer Hochfrequenz-Brückenschaltung und Vergleich mit einer Referenzinduktivität bzw. einer weiteren Aktorspule der gleichen Magnetlagerachse (DE 4210741)
- Zusätzliche Aufmodulation eines sinusförmigen Wechselstromes auf den Strom durch die Aktorspulen und Erfassung und Filterung der resultierenden positionsabhängigen Spannung (EP 0749538)

Bei beiden Wirkprinzipien sind Nachteile zu erwarten, wenn sie mit getakteten Leistungsendstufen kombiniert werden, die wegen ihrer geringen Verlustwärme und ihrer geringen Baugröße oft für Anwendungen dieser Art eingesetzt werden.

Es ist die Aufgabe der Erfindung, ein Sensorsystem für ein Magnetlager mit einer getakteten Leistungsendstufe anzugeben.

Diese Aufgabe wird erfindungsgemäß mit einem Sensorsystem nach Anspruch 1 für ein Regeleinrichtung nach Anspruch 10 für ein Magnetlager nach Anspruch 14 sowie durch ein Verfahren nach Anspruch 15 gelöst.

Die definierte Pulsbreitenmodulation ermöglicht die einfache Erfassung der Position in einem Magnetlagersystem, das mit einer getakteten Endstufe ausgestattet ist. Diese Erfassung ist im wesentlichen unabhängig von dem mittleren Tastverhältnis der getakteten Anregung der beiden Aktorspulen.

Vorzugsweise ist vorgesehen, dass die vorgegebene Reihenfolge darin besteht, dass die Pulsbreite aufeinander folgender Pulse alternierend um jeweils einen kleinen Betrag verlängert oder verkürzt wird. Die Pulsbreite aufeinanderfolgender Pulse kann abwechselnd verkürzt oder verlängert werden, so dass die pulsbreitenmodulierte Anregung die doppelte Taktfrequenz aufweist. Es versteht sich, dass anstelle des zweifachen auch ein anderes Vielfaches der Taktfrequenz der Taktung der getakteten Endstufen vorgesehen sein kann. Insbesondere kann die Taktung des Sensorsystems von einer Taktung einer übergeordneten Einheit, in die das Sensorsystem eingebunden ist, speziell von dem Systemtakt der Regelungseinheit, abgeleitet sein.

Vorzugsweise ist vorgesehen, dass die Differenz des Ripplestroms der Aktorspulen mit dem mindestens einem Stromsensor erfasst wird.

Insbesondere ist hinsichtlich der Ausbildung des Stromsensors vorzugsweise vorgesehen, dass als Stromsensor zur Erfassung der Differenz der Rippleströme in den Aktorspulen ein induktiver Sensor in Form eines Stromwandlers eingesetzt wird. Dieser induktive Sensor kann aus zwei gegenläufigen Spulen bestehen, die einen Kern umlaufen, wobei jede Spule einer der beiden Aktorspulen zugeordnet ist. In Abhängigkeit von dem Strom in den Spulen entsteht eine Restmagnetisierung, die erfasst wird, und deren Auftreten auf eine Abweichung der Induktivitäten der Aktorspulen hinweisen kann. Insbesondere ist es möglich, die Differenz von zwei oder mehreren Aktorspulen mittels eines einzigen induktiven Stromsensors zu erfassen, der als Ausgang ein Differenzsignal bereitstellt.

Alternativ oder ergänzend hierzu ist hinsichtlich der Ausbildung des Stromsensors vorgesehen, dass als Stromsensor ein Stromwandler mit Kondensatoren und Widerständen vorgesehen ist, der so beschaltet ist, dass ein Resonanzkreis entsteht, der auf die Frequenz abgestimmt ist, mit der sich die Reihenfolge vorgegebenen Modulation der Pulsbreite wiederholt. Die den Resonanzkreis bildenden Kondensatoren, Widerstände und Induktivitäten stellen passive Bauelemente dar, die innerhalb des Sensorsystem bzw. innerhalb der Regelungseinheit keinen wesentlichen störenden Einfluss auf andere Komponenten ausüben.

Vorzugsweise ist vorgesehen, dass das Signal des Stromsensors in dem Sensorinterface mathematisch verknüpft wird und insbesondere einer Gleichrichterschaltung zugeführt wird, die synchron zu dem Zeitverlauf der vorgegebenen Reihenfolge der Modulation der Pulsbreite arbeitet. Die mathematische Verknüpfung kann eine Summen- bzw. Differenzbildung umfassen, eine Gleichrichtung durch mathematische Multiplikation mit einer zu dem Takt der Differenz der Rippleströme gleichtaktigen Sprungfunktion zur Korrektur des Vorzeichens der Differenz der Rippleströme, so dass eine Gleichrichtung entsteht, deren Glättung, beispielsweise durch zeitliche Integration, eine im wesentlichen konstante Ausgangsspannung liefert, die wiederum - ggf. vorzeichenbehaftet - der Differenz der Induktivitäten der beiden Aktorspulen und damit der Position des zu erfassenden Gegenstandes zwischen den beiden Aktorspulen entspricht.

Vorzugsweise ist vorgesehen, dass zwischen der vorgegebenen Reihenfolge der Modulation der Pulsbreite und dem Takt der synchronen Gleichrichtung eine insbesondere mittels eines Phasenschiebers einstellbare Zeitverzögerung besteht.

Vorzugsweise ist vorgesehen, dass entweder im Signalpfad für das Sensor-signal oder für das Signal nach der synchronen Gleichrichtung oder in beiden Signalpfaden Bauteile zur Signalverstärkung und / oder zur Signalfilterung eingesetzt werden. Die Signalverstärkung bzw. Signalfilterung modifiziert das Signal beispielsweise derart, dass Störeinflüsse unterdrückt werden beispielsweise Abweichungen der Induktivitäten von einem idealen Verhalten, speziell beispielsweise so, dass die Stromabhängigkeit der Induktivität erfasst und rechnerisch unterdrückt bzw. ausgeglichen werden kann. Diese Bearbeitung des Signals kann im Signalpfad zwischen dem Stromsensor und dem Sensorinterface, oder in dem Sensorinterface, nach der Gleichrichtung des Differenzsignals der beiden Rippleströme der beiden Aktorspulen, oder in beiden Möglichkeiten kombiniert, ausgeführt werden.

Vorzugsweise ist vorgesehen, dass das aus den Rippleströmen gewonnene Positionssignal in einer Regeleinrichtung mit weiteren Signalen mathematisch verknüpft wird, um daraus ein Signal zur Steuerung der Pulsbreite der benannten Endstufen zu gewinnen. Die mathematische Verknüpfung in der Regeleinrichtung kann beispielsweise einen Abgleich des Positionssignals mit Sollwerten umfassen, um daraus einen Stellwert zu ermitteln, beispielsweise zu berechnen, den die Regeleinrichtung ausgibt. Es bietet sich an, dass die Regeleinrichtung die Pulsbreite der Endstufen als Stellgröße ansteuert, da das Sensorsystem im wesentlichen von der Pulsbreite der Endstufen unabhängig ist und somit eine Kopplung zwischen der Regeleinrichtung und dem Sensorsystem vermeidbar wird.

Vorzugsweise ist hinsichtlich der weiteren Signale in der Regeleinrichtung vorgesehen, dass die weiteren Signale die aktuellen Stromwerte der Aktorspulen oder deren mathematische Ableitung sind.

Vorzugsweise ist hinsichtlich der Regeleinrichtung vorgesehen, dass ein gemeinsamer Systemtaktgenerator für das Sensorsystem und die Regeleinrichtung vorgesehen ist, wobei ein Systemtakt der Regeleinrichtung mit weiteren Baugruppen eines übergeordneten Systems synchronisiert wird. Das übergeordnete System kann beispielsweise ein getakteter Motor sein, der abschnittsweise in dem Magnetlager gelagert ist.

Die vorstehend beschriebene Ausgestaltung des Sensorsystems bzw. der Regeleinrichtung ermöglicht insbesondere die Durchführung eines Verfahrens zur Erfassung der Position in einem Magnetlager, wobei das Verfahren die Schritte umfasst: Bereitstellen einer pulsbreitenmodulierten Ausgangsspannung an den Leistungsendstufen, wobei die Pulsbreite in einer vorgegebenen Reihenfolge um jeweils kleine Beträge verkürzt bzw. verlängert wird, und wobei die Modulation der Pulsbreiten der getakteten Leistungsendstufen in einer festen Phasenbeziehung zueinander erfolgt, und Erfassen der Differenz der Rippleströme mit dem Stromsensor. Die Differenz der Rippleströme ist die Eingangsgröße der Regeleinrichtung für das Magnetlager.

Weitere Vorteile und Merkmale ergeben sich aus den abhängigen Ansprüchen sowie aus der Beschreibung eines bevorzugten Ausführungsbeispiels.

Die Erfindung wird im folgenden unter Bezugnahme auf die anliegenden Zeichnungen näher beschrieben und erläutert.
- Fig. 1: zeigt eine schematische Darstellung eines Schaltbildes der einzelnen Elemente eines Ausführungsbeispiels eines erfindungsgemäßen Sensorsystems in einem Ausführungsbeispiel einer erfindungsgemäßen Regeleinrichtung als Vorrichtung zur beispielhaften Durchführung des erfindungsgemäßen Verfahrens,
- Fig. 2: zeigt den theoretisch zu erwartenden Verlauf der Rippleströme zweiter Aktorspulen eines Ausführungsbeispiels eines erfindungsgemäßen Magnetlagers, wobei die beiden Aktorspulen unterschiedliche Induktivitäten aufweisen (obere Darstellung; L1 > L2) bei jeweils gleicher Anregung (untere Darstellung),
- Fig. 3: zeigt den theoretisch zu erwartenden Verlauf der Rippleströme zweier Aktorspulen (obere Darstellung), die jeweils mit unterschiedlichen Tastverhältnissen angeregt werden (mittlere und untere Darstellung) und die eine unterschiedliche Induktivität aufweisen,
- Fig.4: zeigt den Signalverlauf an einigen funktionsbestimmenden Punkten der schematischen Darstellung nach Fig. 1, mit L1 > L2, und
- Fig. 5: zeigt den Signalverlauf an einigen funktionsbestimmenden Punkten der schematischen Darstellung nach Fig. 1, mit L1 < L2.

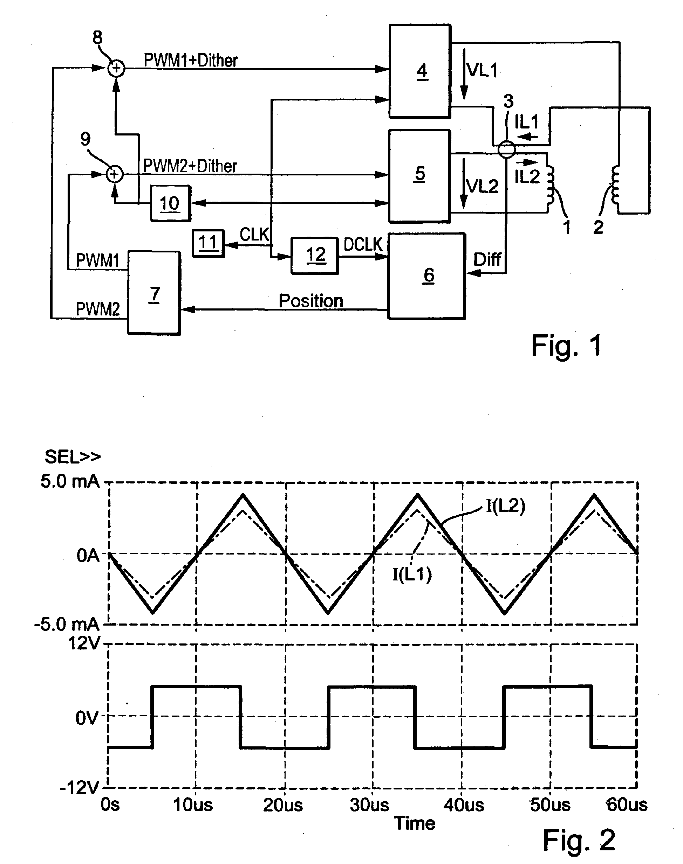

In Fig. 1 ist der schematische Aufbau des erfindungsgemäßen Sensorsystems bzw. der erfindungsgemäßen Regeleinrichtung für ein erfindungsgemäßen Magnetlager beispielhaft dargestellt.
Das Wirkprinzip beruht darauf, dass sich die Induktivität der beiden Aktorspulen 1, 2 des Magnetlagers in Abhängigkeit von der Position des gelagerten Körpers ändert. Das bewirkt bei einer Ansteuerung der jeweiligen Aktorspule 1, 2 mit einem pulsbreitenmodulierten Signal aus einer getakteten Leistungsendstufe 4, 5, dass sich der Verlauf des Ripplestroms in der jeweiligen Aktorspule 1, 2 ebenfalls ändert.

In Fig. 2 ist der theoretische Verlauf der Rippleströme zweier Aktorspulen 1, 2 dargestellt, wobei die Aktorspule 1 eine größere Induktivität L1 aufweist als die Aktorspule 2 mit der Induktivität L2. Da sich die Tastverhältnisse der Anregung der Aktorspulen 1, 2 beim Betrieb in einem Magnetlager in der Regel unterscheiden, kann die einfache Auswertung des jeweiligen Ripplestroms nicht zur Bewertung der Induktivitäten herangezogen werden.

Daher wird das Tastverhältnis aufeinander folgender Pulse alternierend um einen kleinen konstanten Betrag (Dither) erhöht bzw. verringert, so dass das mittlere Tastverhältnis unverändert bleibt. Im Ergebnis weist der Ripplestrom durch jede der beiden Aktorspulen 1, 2 eine periodische Amplitudenmodulation auf, die bei idealen Induktivitäten L1, L2 unabhängig vom mittleren Strom durch die beiden Aktorspulen 1, 2 und ebenso unabhängig vom mittleren Tastverhältnis ist.

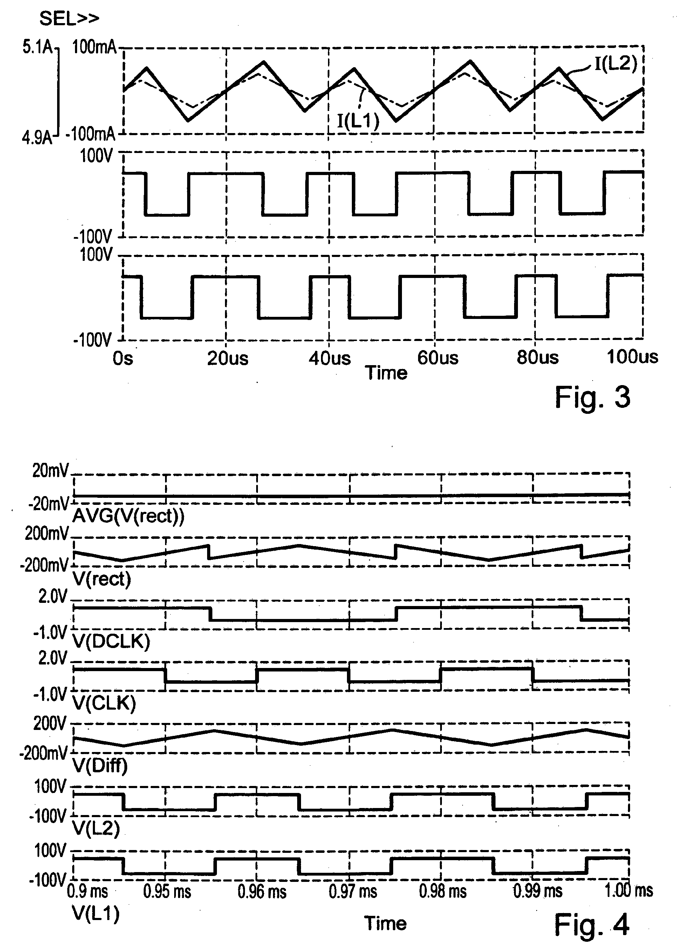

In Fig. 3 sind die theoretischen Verläufe der pulsbreitenmodulierten Anregung zweier Aktorspulen 1, 2 und der resultierende Verlauf des jeweiligen Ripplestroms dargestellt. Trotz unterschiedlicher Tastverhältnisse der Anregung und unterschiedlicher Stromniveaus beider Aktorspulen 1, 2 bleibt die Modulation der Amplitude des Ripplestroms als Ergebnis der Modulation des Tastverhältnisses erhalten. Zur Auswertung der Modulation des Ripplestroms wird in den Zuleitungen zu den Aktorspulen 1, 2 ein Stromsensor 3 angebracht, der die Differenz der beiden Ströme erfasst. Im einfachsten Fall kann dieser Stromsensor aus einem induktiven Stromwandler bestehen. Das aus dem Stromwandler 3 gewonnene Differenzsignal (Diff, Fig. 1) wird in einem Sensorinterface 6 ausgewertet. Diese Auswertung beinhaltet eine ein- oder mehrstufige Verstärkung, eine zu einem vom Systemtakt CLK abgeleiteten Taktsignal DCLK synchrone Gleichrichtung und ein- bzw. mehrstufige Filter. Das abgeleitete Taktsignal DCLK hat genau die halbe Frequenz des vom Taktgenerator 11 bereitgestellten Systemtaktes CLK und ist über einen Phasenschieber 12 verbunden. Der Phasenschieber 12 trägt der Tatsache Rechnung, dass der resultierende Ripplestrom gegenüber der Anregung über das Tastverhältnis naturgemäß eine Verzögerung aufweist.

Das Ausgangssignal des Sensorinterfaces 6 trägt die Information über die augenblickliche Position des in dem Magnetlager mit den Aktorspulen 1, 2 gelagerten Gegenstandes. In der darauf folgenden Regeleinrichtung wird das Differenz-Signal der Rippleströme der beiden Aktorspulen, ggf. nach einer zwischengeschalteten Bearbeitung des Signals, mit der Sollposition verglichen und die Lageabweichung in bekannter Weise in der Regeleinrichtung 7 verarbeitet. Die Regeleinrichtung 7 bestimmt aus der Lageabweichung und ggf. den Momentanwerten des Stromes der Aktorspulen 1, 2 sowie weiteren Parametern (z. B. Drehzahl eines zwischen den Aktorspulen 1, 2 gelagerten Rotors in dem Magnetlagers) einen mittleren Wert für das Taktverhältnis der getakteten Leistungsendstufen 4, 5. Aus Gründen der vereinfachten Darstellung wurden die entsprechenden Signalpfade nicht mit dargestellt. Diesem Taktverhältnis wird anschließend in den beiden Summationspunkten 8, 9 eine Modulation mit einem Dithersignal auferlegt. Das Dithersignal wird in einem Dithergenerator 10 aus dem Systemtakt CLK gewonnen und weist exakt die halbe Frequenz des Systemtaktes CLK und ggf. eine Phasenverschiebung auf. Die Leistungsendstufen 4, 5 werden ebenfalls vom Systemtakt getriggert und stehen in einer festen Phasenbeziehung zum Systemtakt. Aus Gründen der Vermeidung von Störungen im System sollten auch in einem System zusammengefasste mehrfache Aktorsysteme vom gleichen Systemtakt gesteuert werden.

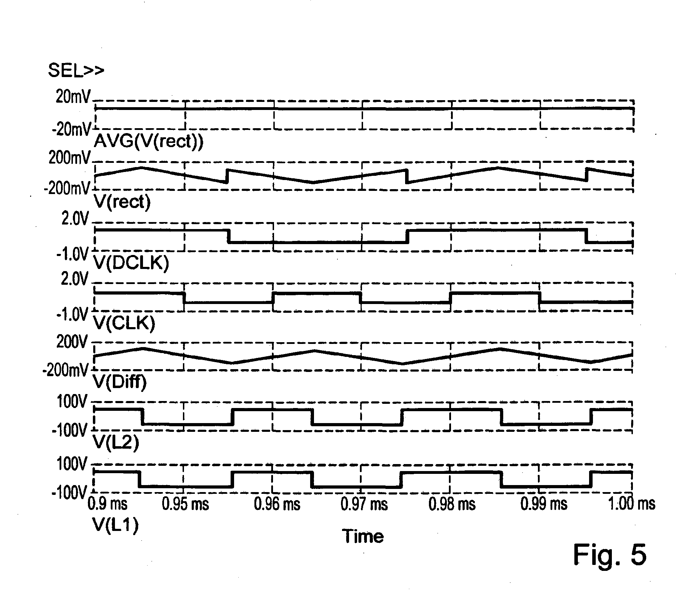

In den Fig.. 4 und 5 sind jeweils für den Fall, dass die Induktivitäten L1, L2 der Aktorspulen 1, 2 unterschiedliche Werte zueinander angenommen haben, die resultierenden theoretischen Signalverläufe dargestellt. In der Reihenfolge von unten nach oben sind die Verläufe:
- Anregende Spannung an der ersten Aktorspule 1,
- Anregende Spannung an der zweiten Aktorspule 2,
- Ausgangssignal eines induktiven Stromsensors 3, der den Differenzstrom beider Aktorspulen 1,2 erfasst,
- Systemtakt CLK,
- für den vorliegenden Fall optimal in der Phase eingestelltes abgeleitetes Taktsignal DCLK,
- Verlauf des erfassten Stromdifferenzsignals Diff nach der synchronen Gleichrichtung Vrect, und
- unverstärktes Positionssignal.
dargestellt. Als Ergebnis der unterschiedlichen Induktivitäten L1, L2 der Aktorspulen 1, 2 weist das unverstärkte Positionssignal in Fig. 4 eine negative Polarität und das in Fig.. 5 dargestellte Positionssignal eine positive Polarität auf, jeweils bezogen auf eine Offsetspannung von 0 Volt. Beiden Darstellungen liegen die gleichen Aktorspulen 1, 2 unterschiedlicher Induktivität L1, L2 zugrunde, die einfach miteinander vertauscht wurden. Das Ergebnis (Fig. 4 und Fig. 5, jeweils oberstes Teilbild) ist jeweils ein annäherndes Gleichspannungs-Signal, das vorzeichenbehaftet ist und angibt, wo der gelagerte Rotor bezogen auf die Aktorspulen 1, 2 angeordnet ist.

Bei dem vorstehend beschriebenen Ausführungsbeispiel war zur Modulation der Pulsbreite vorgesehen, dass unmittelbar aufeinanderfolgende Pulse jeweils eine verkürzte bzw. vergrößerte Pulsbreite aufweisen, so dass die Modulation die doppelte Periode der Anregung der Aktorspulen 1, 2, aufweist. Es versteht sich, dass auch drei oder mehr verschiedene Pulsbreiten vorgesehen sein können, so dass die Modulation ein größeres Vielfaches der Anregung aufweisen kann.

Die Erfindung wurde vorstehend anhand eines Ausführungsbeispiels näher beschrieben und erläutert, bei dem die Ausgangsgröße des Sensorinterfaces 6 Eingangsgröße der Regeleinrichtung 7 war. Es versteht sich, dass die Ausgangsgröße des Sensorsystems auch für andere Zwecke ausgewertet werden kann.

### Bezugszeichenliste

- 1: erste Aktorspule 1
- 2: zweite Aktorspule 2
- 3: Stromsensor
- 4: getaktete Leistungsendstufe 1
- 5: getaktete Leistungsendstufe 2
- 6: Sensorinterface mit phasenrichtiger Gleichrichtung, Verstärkung und Filterung
- 7: Regeleinrichtung
- 8: Summationspunkt 1
- 9: Summationspunkt 2
- 10: Dithergenerator
- 11: Taktgenerator
- 12: Phasenschieber

## Patentansprüche

1. Sensorsystem für ein Magnetlager, umfassend zwei Aktorspulen (1, 2), zwei getakteten Leistungsendstufen (4, 5), einen Stromsensor (3) zur Erfassung der mit einem Ripplestrom behafteten Ströme in den Aktorspulen (1, 2) und einem Sensorinterface (6),
wobei die getakteten Leistungsendstufen (4, 5) eine pulsbreitenmodulierte Ausgangsspannung bereitstellen, deren Pulsbreite in einer vorgegebenen Reihenfolge um jeweils kleine Beträge verkürzt bzw. verlängert wird, und
wobei die Modulation der Pulsbreiten der getakteten Leistungsendstufen (4, 5) in einer festen Phasenbeziehung zueinander erfolgt.

2. Sensorsystem nach Anspruch 1, **dadurch gekennzeichnet, dass** die vorgegebene Reihenfolge darin besteht, dass die Pulsbreite aufeinander folgender Pulse alternierend um jeweils einen kleinen Betrag verlängert oder verkürzt ist.

3. Sensorsystem nach Anspruch 1 oder 2, **dadurch gekennzeichnet, dass** die Differenz des Ripplestroms der Aktorspulen (1, 2) mit dem mindestens einem Stromsensor (3) erfasst wird.

4. Sensorsystem nach Anspruch 3, **dadurch gekennzeichnet, dass** als Stromsensor (3) zur Erfassung der Differenz der Rippleströme in den Aktorspulen (1, 2) ein induktiver Sensor in Form eines Stromwandlers eingesetzt wird.

5. Sensorsystem nach Anspruch 3, **dadurch gekennzeichnet, dass** als Stromsensor (3) ein Stromwandler mit Kondensatoren und Widerständen vorgesehen ist, der so beschaltet ist, dass ein Resonanzkreis entsteht, der auf die Frequenz abgestimmt ist, mit der sich die Reihenfolge vorgegebenen Modulation der Pulsbreite wiederholt.

6. Sensorsystem nach einem der Ansprüche 1 bis 5, **dadurch gekennzeichnet, dass** das Signal des Stromsensors (3) in dem Sensorinterface (6) mathematisch verknüpft wird und insbesondere einer Gleichrichterschaltung zugeführt wird, die synchron zu dem Zeitverlauf der vorgegebenen Reihenfolge der Modulation der Pulsbreite arbeitet.

7. Sensorsystem nach Anspruch 6, **dadurch gekennzeichnet, dass** zwischen der vorgegebenen Reihenfolge der Modulation der Pulsbreite und dem Takt der synchronen Gleichrichtung eine insbesondere mittels eines Phasenschiebers (12) einstellbare Zeitverzögerung besteht.

8. Sensorsystem nach Anspruch 6 oder 7, **dadurch gekennzeichnet, dass** entweder im Signalpfad für das Sensorsignal oder für das Signal nach der synchronen Gleichrichtung oder in beiden Signalpfaden Bauteile zur Signalverstärkung und / oder zur Signalfilterung eingesetzt werden.

9. Sensorsystem nach einem der Ansprüche 1 bis 8, in Kombination mit einer Regeleinrichtung (7) für ein Magnetlager.

10. Kombination aus Sensorsystem und Regeleinrichtung (7) nach Anspruch 9, **dadurch gekennzeichnet, dass** das aus den Rippleströmen der mindestens zwei Aktorspulen (1, 2) gewonnene Positionssignal mit weiteren Signalen mathematisch verknüpft wird, um daraus ein Signal zur Steuerung der Pulsbreite der Leistungsendstufen (3, 4) zu gewinnen.

11. Kombination aus Sensorsystem und Regeleinrichtung nach Anspruch 10, **dadurch gekennzeichnet, dass** die weiteren Signale die aktuellen Stromwerte der Aktorspulen (1, 2) oder deren mathematische Ableitung sind.

12. Übergeordnetes System, umfassend die Kombination aus Sensorsystem und Regeleinrichtung nach einem der Ansprüche 9 bis 11, **dadurch gekennzeichnet, dass** ein gemeinsamer Systemtaktgenerator (DCLK) für das Sensorsystem und die Regeleinrichtung (7) vorgesehen ist, wobei ein Systemtakt der Regeleinrichtung (7) mit weiteren Baugruppen des übergeordneten Systems synchronisiert wird.

13. Magnetlager, umfassend ein Sensorsystem nach einem der Ansprüche 1 bis 8, insbesondere in Kombination mit einer Regeleinrichtung.

14. Verfahren zur Positionserfassung in einem Magnetlager, wobei das Magnetlager zwei Aktorspulen (1, 2), zwei getaktete Leistungsendstufen (4, 5) und einen Stromsensor (3) zur Erfassung der Rippleströme in den Aktorspulen (1, 2) umfasst, umfassend die Schritte:
Bereitstellen einer pulsbreitenmodulierten Ausgangsspannung an den Leistungsendstufen (4, 5), wobei die Pulsbreite in einer vorgegebenen Reihenfolge um jeweils kleine Beträge verkürzt bzw. verlängert wird, und wobei die Modulation der Pulsbreiten der getakteten Leistungsendstufen in einer festen Phasenbeziehung zueinander erfolgt, und Erfassen der Differenz der Rippleströme mit dem Stromsensor (3).

## Claims

1. Sensor system for a magnetic bearing, comprising two actuator coils (1, 2), two clocked power output stages (4, 5), a current sensor (3) for detection of the currents, with a ripple current on them, in the actuator coils (1, 2), and a sensor interface (6), wherein the clocked power output stages (4, 5) provide a pulse-wide-modulated output voltage, whose pulse width is shortened or lengthened by small amounts in each case in a predetermined sequence, and
wherein the pulse widths of the clocked power output stages (4, 5) are modulated with a fixed phase relationship with respect to one another.

2. Sensor system according to Claim 1, **characterized in that** the predetermined sequence consists of the pulse width of successive pulses each being alternately lengthened or shortened by a small amount.

3. Sensor system according to Claim 1 or 2, **characterized in that** the difference between the ripple current in the actuator coils (1, 2) is detected by the at least one current sensor (3).

4. Sensor system according to Claim 3, **characterized in that** an inductive sensor in the form of a current transformer is used as the current sensor (3) for detection of the difference between the ripple currents in the actuator coils (1, 2).

5. Sensor system according to Claim 3, **characterized in that** a current transformer with capacitors and resistors is provided as the current sensor (3) and is connected such that a resonant circuit is formed, which is tuned to the frequency at which the sequence of predetermined modulation of the pulse width is repeated.

6. Sensor system according to one of Claims 1 to 5, **characterized in that** the signal from the current sensor (3) is mathematically linked in the sensor interface (6), and in particular is supplied to a rectifier circuit which operates synchronized to the time profile of the predetermined sequence of the modulation of the pulse width.

7. Sensor system according to Claim 6, **characterized in that** a time delay, which can be varied in particular by means of a phase shift (12), exists between the predetermined sequence of the modulation of the pulse width and the clock of the synchronous rectification.

8. Sensor system according to Claim 6 or 7, **characterized in that** components for signal amplification and/or for signal filtering are used either in the signal path of the sensor signal or for the signal after the synchronous rectification, or in both signal paths.

9. Sensor system according to one of Claims 1 to 8 in combination with a regulation device (7) for a magnetic bearing.

10. Combination of sensor system and regulation device (7) according to Claim 9, **characterized in that** the position signal which is obtained from the ripple currents in the at least two actuator coils (1, 2) is mathematically linked to further signals in order to obtain from this a signal for controlling the pulse width of the power output stages (4, 5).

11. Combination of sensor system and regulation device according to Claim 10, **characterized in that** the further signals are the instantaneous current values in the actuator coils (1, 2), or their mathematical derivative.

12. Superordinate system, comprising the combination of sensor system and regulation device according to one of Claims 9 to 11, **characterized in that** a common system clock generator (DCLK) is provided for the sensor system and the regulation device (7), wherein a system clock for the regulation device (7) is synchronized to further assemblies in the superordinate system.

13. Magnetic bearing, comprising a sensor system according to one of claims 1 to 8, in particular in combination with a regulation device.

14. Method for position detection in a magnetic bearing, wherein the magnetic bearing comprises two actuator coils (1, 2), two clocked power output stages (4, 5) and a current sensor (3) for detection of the ripple currents in the actuator coils (1, 2), comprising the following steps:
provision of a pulse-width-modulated output voltage at the power output stages (4, 5), wherein the pulse width is shortened or lengthened by small amounts in each case in a predetermined sequence, and wherein the pulse widths of the clocked power output stages are modulated with a fixed phase relationship with respect to one another, and detection of the difference between the ripple currents by means of the current sensor (3).

## Revendications

1. Système de détection pour un palier magnétique, comprenant deux bobines d'actionneur (1, 2), deux étages finaux de puissance (4, 5) cadencés, un détecteur de courant (3) pour détecter les courants présentant un courant ondulatoire dans les bobines d'actionneur (1, 2) et une interface de capteur (6), les étages finaux de puissance (4, 5) cadencés délivrant une tension de sortie modulée en largeur d'impulsion dont la largeur d'impulsion est raccourcie ou rallongée à chaque fois de petits montants dans un ordre prédéfini, et
la modulation des largeurs d'impulsion des étages finaux de puissance (4, 5) cadencés s'effectuant dans une relation de phase fixe l'un par rapport à l'autre.

2. Système de détection selon la revendication 1, **caractérisé en ce que** l'ordre prédéfini consiste **en ce que** la largeur d'impulsion d'impulsions successives soit rallongée ou raccourcie en alternance à chaque fois d'un petit montant.

3. Système de détection selon la revendication 1 ou 2, **caractérisé en ce que** la différence du courant ondulatoire des bobines d'actionneur (1, 2) est détectée avec l'au moins un détecteur de courant (3).

4. Système de détection selon la revendication 3, **caractérisé en ce que** le détecteur de courant (3) utilisé pour détecter la différence des courants ondulatoires dans les bobines d'actionneur (1, 2) est un détecteur inductif sous la forme d'un convertisseur de courant.

5. Système de détection selon la revendication 3, **caractérisé en ce que** le détecteur de courant (3) prévu est un convertisseur de courant comprenant des condensateurs et des résistances qui est connecté de telle sorte qu'il se produit un circuit résonant qui est accordé sur la fréquence avec laquelle se répète l'ordre de modulation prédéfini de la largeur d'impulsion.

6. Système de détection selon l'une des revendications 1 à 5, **caractérisé en ce que** le signal du détecteur de courant (3) est combiné mathématiquement dans l'interface de capteur (6) et est notamment acheminé à un circuit redresseur qui fonctionne de manière synchrone avec l'écoulement dans le temps de l'ordre prédéfini de modulation de la largeur d'impulsion.

7. Système de détection selon la revendication 6, **caractérisé en ce qu'**entre l'ordre prédéfini de modulation de la largeur d'impulsion et le cycle du redressement synchrone, il existe un retard dans le temps notamment réglable au moyen d'un déphaseur (12).

8. Système de détection selon la revendication 6 ou 7, **caractérisé en ce que** des composants d'amplification du signal et/ou de filtrage du signal sont utilisés soit dans le trajet de signal pour le signal du capteur, soit pour le signal après le redressement synchrone, soit dans les deux trajets de signal.

9. Système de détection selon l'une des revendications 1 à 8, en combinaison avec un dispositif de régulation (7) pour un palier magnétique.

10. Combinaison d'un système de détection et d'un dispositif de régulation (7) selon la revendication 9, **caractérisée en ce que** le signal de position obtenu à partir des courants ondulatoires des au moins deux bobines d'actionneur (1, 2) est combiné mathématiquement avec des signaux supplémentaires afin d'obtenir à partir de là un signal pour commander la largeur d'impulsion des étages finaux de puissance (4, 5).

11. Combinaison d'un système de détection et d'un dispositif de régulation selon la revendication 10, **caractérisée en ce que** les signaux supplémentaires sont les valeurs de courant actuelles des bobines d'actionneur (1, 2) ou leur dérivée mathématique.

12. Système superviseur, comprenant la combinaison d'un système de détection et d'un dispositif de régulation selon l'une des revendications 9 à 11, **caractérisé en ce qu'**il est prévu un générateur d'horloge système commun (DCLK) pour le système de détection et le dispositif de régulation (7), une horloge système du dispositif de régulation (7) étant synchronisée avec d'autres sous-ensembles du système superviseur.

13. Palier magnétique, comprenant un système de détection selon l'une des revendications 1 à 8, notamment en combinaison avec un dispositif de régulation.

14. Procédé de détection de position dans un palier magnétique, le palier magnétique comprenant deux bobines d'actionneur (1, 2), deux étages finaux de puissance (4, 5) cadencés et un détecteur de courant (3) pour détecter les courants ondulatoires dans les bobines d'actionneur (1, 2), comprenant les étapes suivantes :
délivrance d'une tension de sortie modulée en largeur d'impulsion au niveau des étages finaux de puissance (4, 5), la largeur d'impulsion étant raccourcie ou rallongée à chaque fois de petits montants dans un ordre prédéfini, et
la modulation des largeurs d'impulsion des étages finaux de puissance cadencés s'effectuant dans une relation de phase fixe l'un par rapport à l'autre, et détection de la différence des courants ondulatoires avec le détecteur de courant (3).
